(19) **Europäisches Patentamt / European Patent Office / Office européen des brevets**

(11) **EP 4 617 953 A1**

(12) **EUROPÄISCHE PATENTANMELDUNG**

(43) Veröffentlichungstag:
**17.09.2025 Patentblatt 2025/38**

(21) Anmeldenummer: **24163744.6**

(22) Anmeldetag: **15.03.2024**

(51) Internationale Patentklassifikation (IPC):
**G06N 3/0499** (2023.01)  **G06N 7/01** (2023.01)
**G06N 20/00** (2019.01)

(52) Gemeinsame Patentklassifikation (CPC):
**G06N 20/00; G06N 3/0499; G06N 3/08; G06N 7/01**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Nüßlein, Jonas**
**80469 München (DE)**
• **Schmid, Reiner**
**80538 München (DE)**

(74) Vertreter: **Siemens Patent Attorneys**
**Postfach 22 16 34**
**80506 München (DE)**

(54) **COMPUTER-IMPLEMENTIERTES VERFAHREN ZUM GENERIEREN EINES TRAINIERTEN MACHINE-LEARNING-MODELLS ZUM SIMULIEREN EINES VERHALTENS EINES TECHNISCHEN SYSTEMS**

(57) Die Erfindung betrifft ein computer-implementiertes Verfahren zum Generieren eines trainierten Machine-Learning-Modells zum Simulieren eines Verhaltens eines technischen Systems, aufweisend die Schritte: a. Bereitstellen von einer Mehrzahl von Trainingsdatentupel (S1); wobei jeder Trainingsdatentupel der Mehrzahl der Trainingsdatentupel ein erstes Datenelement eines ersten Zustands des technischen Systems und eine Aktion aufweist; wobei der erste Zustand durch die Aktion in einen zweiten Zustand wechselt; b. Trainieren eines Machine-Learning-Modells auf Basis der Mehrzahl der Trainingsdatentupel und unter Berücksichtigung einer Zeit-Invarianz (S2); und c. Bereitstellen des trainierten Machine-Learning-Modells (S3).

Ferner betrifft die Erfindung ein technisches System und ein entsprechendes Computerprogrammprodukt.

## FIG 1

EP 4 617 953 A1

**Beschreibung**

1. Technisches Gebiet

Die Erfindung betrifft ein computer-implementiertes Verfahren zum Generieren eines trainierten Machine-Learning-Modells zum Simulieren eines Verhaltens eines technischen Systems.

Ferner ist die Erfindung auf ein entsprechendes technisches System und ein Computerprogrammprodukt gerichtet.

2. Stand der Technik

Sicherheitsrelevante technische Systeme auf diversen Anwendungsgebieten von eingebetteten Systemen (engl. embedded systems), beispielsweise auf dem Gebiet der Luftfahrt, der Medizintechnik oder der industriellen Fertigung gewinnen zunehmend an Bedeutung. Mit der steigenden Komplexität der technischen Systeme entwickelt sich ein Bedarf, solche technischen Systeme zu simulieren, wie beispielsweise eine komplexe Fertigungsmaschine. Üblicherweise werden gemäß dem Stand der Technik sogenannte "Digitale Zwillinge" erstellt, die das Systemverhalten simulieren. Mit Hilfe des digitalen Zwillings können Situationen simuliert werden, die mit der echten Maschine entweder zu aufwändig oder zu gefährlich sind.

Das Erstellen eines Digitalen Zwillings mittels Maschinellem Lernen wird auch als "Model learning" bezeichnet. Das technische System kann durch einen Markov Entscheidungsprozess definiert werden mit einer Menge von diskreten Messpunkten D = {(s,a,s')} des Systemverhaltens, wobei s ein Zustand, a eine Aktion und s' der nächste Zustand ist.

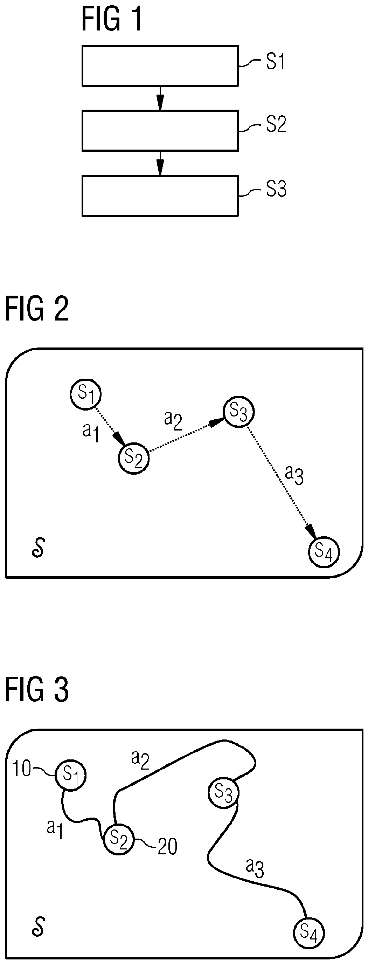

Beim "Model learning" wird ein Modell mittels Maschinellem Lernen mit den diskreten Messpunkten D trainiert. Das Modell kann dementsprechend als Machine-Learning-Modell bezeichnet werden mit f(s,a) = s'. Die Vorhersage des nächsten Zustandes s' ist gemäß dem Stand der Technik diskret. Folglich ist das technische System im Modell im Zustand s und springt durch eine Aktion a in den nächsten Zustand s'. Figur 2 zeigt eine schematische Darstellung eines zweidimensionalen Zustandsraums mit den diskreten Vorhersagen gemäß dem Stand der Technik. Die diskrete Zustandsänderung gemäß dem Stand der Technik entspricht jedoch meist nicht dem zugrundeliegenden kontinuierlichen Zustandsübergang in der echten Welt.

Die Systemzustände des technischen Systems beschreiben meist physikalische Eigenschaften, wie zum Beispiel die Temperatur, die Lautstärke, und die Geschwindigkeit. Die Eigenschaften sind folglich kontinuierlicher Natur. Das technische System hat beispielsweise die Temperatur 40 Grad und 50 Grad, welche als diskrete Messpunkte D bereitgestellt werden und in den Trainingsdaten zum Trainieren vorliegen. Dies entspricht jedoch nicht dem zugrundeliegenden kontinuierlichen Zustandsübergang in der echten Welt.

In der physikalischen Wirklichkeit gibt es hingegen einen kontinuierlichen Pfad von 40 bis 50 Grad. Das technische System war dementsprechend nicht nur im Zustand 40 Grad, sondern auch im Zustand 41 Grad, 41,7 Grad usw. bis 50 Grad.

Daher besteht ein zunehmender Bedarf an einer Simulation kontinuierlichen Zustandsänderungen mit diskreten Trainingsmengen.

Die vorliegende Erfindung stellt sich daher die Aufgabe ein computer-implementiertes Verfahren zum Generieren eines trainierten Machine-Learning-Modells zum Simulieren eines Verhaltens eines technischen Systems bereitzustellen, welches effizienter und zuverlässiger ist.

3. Zusammenfassung der Erfindung

Die oben genannte Aufgabe wird erfindungsgemäß durch ein computer-implementiertes Verfahren zum Generieren eines trainierten Machine-Learning-Modells zum Simulieren eines Verhaltens eines technischen Systems gelöst, aufweisend die Schritte:

    a. Bereitstellen von einer Mehrzahl von Trainingsdatentupel; wobei

        jeder Trainingsdatentupel der Mehrzahl der Trainingsdatentupel ein erstes Datenelement eines ersten Zustands des technischen Systems und eine Aktion aufweist; wobei

        der erste Zustand durch die Aktion in einen zweiten Zustand wechselt;

    b. Trainieren eines Machine-Learning-Modells auf Basis der Mehrzahl der Trainingsdatentupel und unter Berücksichtigung einer Zeit-Invarianz; und

c. Bereitstellen des trainierten Machine-Learning-Modells.

Dementsprechend ist die Erfindung auf ein computer-implementiertes Verfahren zum Generieren eines trainierten Machine-Learning-Modells zum Simulieren eines Verhaltens eines technischen Systems gerichtet. Mit anderen Worten wird mittels des Verfahrens ein trainiertes Modell basierend auf Maschinellem Lernen erzeugt. Das Machine-Learning-Modell ist dazu eingerichtet das Verhalten des technischen Systems zu simulieren. Das Machine-Learning-Modell kann folglich auch als "Digitaler Zwilling" oder "Simulator" bezeichnet werden. Bevorzugt ist das Machine-Learning-Modell ein Feed-Forward Netz. Das technische System umfasst üblicherweise eine Mehrzahl von technischen Komponenten, wie Hardwarekomponenten und/oder Softwarekomponenten. Beispielhafte technische Systeme sind autonome Transportmittel, wie autonomer Zug und autonomes Fahrzeug, sowie industrielle Anlagen.

In einem ersten Verfahrensschritt wird die Mehrzahl der Trainingsdatentupel bereitgestellt. Die Trainingsdatentupel können auch als Trainingsdaten und somit Eingabedaten für das Machine-Learning-Modell, dementsprechend auch für das Trainieren bezeichnet werden. Die Eingabedaten können über eine oder mehrere Eingabeschnittstellen empfangen werden. Zusätzlich oder alternativ können die Ausgabedaten, wie das trainierte Machine-Learning-Modell, auch über eine oder mehrere Ausgabeschnittstellen gesendet werden. Dadurch wird eine effiziente Datenübertragung zwischen Recheneinheiten gewährleistet.

Die Trainingsdatentupel umfassen jeweils das erste Datenelement des ersten Zustands des technischen Systems und die Aktion. Das technische System kann durch die Aktion vom ersten Zustand in einen anderen Zustand oder einen zweiten Zustand wechseln. Folglich erfolgt der Zustandswechsel durch die Aktion.

In einem weiteren Verfahrensschritt wird das Machine-Learning-Modell mit den Trainingsdatentupel trainiert. In dieser Trainingsphase wird die Zeit-Invarianz berücksichtigt. Mit anderen Worten findet die Zeit-Invarianz bezüglich Sequenzen im Verfahren Berücksichtigung. Folglich spielt es für die Vorhersage des nächsten Systemzustandes keine Rolle, ob und wie Zeiteinheiten in Unter-Zeiteinheiten aufgeteilt werden.

Im letzten Verfahrensschritt wird das trainierte Machine-Learning-Modell bereitgestellt.

Die vorliegende Erfindung ermöglicht es im Gegensatz zum Stand der Technik die kontinuierlichen Zustandsänderungen mit diskreten Trainingsmengen zu simulieren.

In einer Ausgestaltung sind die Mehrzahl der Trainingsdatentupel jeweils diskrete Messpunkte.

In einer weiteren Ausgestaltung sind die Datenelemente Daten, bevorzugt Systemdaten.

Dementsprechend sind die diskreten Daten D des Verhaltens des technischen Systems der Ausgangspunkt für das Verfahren. Die diskreten Daten D können durch gezielte Messreihen ermittelt werden. Alternativ oder zusätzlich können die diskreten Daten D im Rahmen des Betriebs des technischen Systems gemessen und in regelmäßigen Zeitpunkten erfasst werden mit den Messpunkten $D = \{(s\_i, a\_i, s'\_i)\}$.

Die Systemdaten s, s' können dabei durch eine Sensoreinheit des technischen Systems erfasst werden. Die Information über die durchgeführte Aktion a kann durch eine technische Komponente bestimmt werden, wie durch die Steuerung des technischen Systems. Die Bestimmung kann über ein definiertes zusammenhängendes Zeitintervall mit ausreichender Länge erfolgen, um das Verhalten des technischen Systems ausreichend abzubilden. Der Vorteil liegt darin, dass die Datenqualität sichergestellt ist und somit auch die Zuverlässigkeit und Genauigkeit des Trainings signifikant erhöht werden.

Anhand eines Szenarienpools kann zusätzlich geprüft werden, ob die Trainingsdatentupel den Bereich, für den die Simulation erforderlich ist, ausreichend abdecken. Ist dies der Fall, liegt eine ausreichende bzw. erforderliche Datenqualität vor. Der Vorteil liegt darin, dass die Qualität des Trainings weiterhin erhöht wird, wie die Zuverlässigkeit und die Genauigkeit des Trainings. Die Qualität der Datentupel ist entscheidend, da das Training auf den Trainingdatentupel basiert. Die Datentupel bilden die Basis für das Training und das resultierende Ergebnis.

In einer weiteren Ausgestaltung wird beim Trainieren in Schritt b. die Zeit-Invarianz berücksichtigt indem

jedes Trainingsdatentupel der Mehrzahl der Trainingsdatentupel um jeweils mindestens einen Zeitparameter erweitert wird; wobei

der mindestens eine Zeitparameter jeweils angibt, dass die jeweilige Aktion vom ersten Zustand ausgehend für die zugehörige bestimmte Zeiteinheit des Zeitparameters ausgeführt wird.

Gemäß dem Stand der Technik kann das Machine-Learning-Modell durch die Funktion $f(s,a) = s'$ beschrieben werden. Das Machine-Learning-Modell wird mit den diskreten Messpunkten $D = \{(s,a,s')\}$ trainiert, wobei s der Zustand, a die Aktion und s' der nächste Zustand ist. Die Eingabedaten, auch Input Variablen genannt, des Machine-Learning-Modells f, werden in dieser Ausgestaltung im Hinblick auf die Zeit-Invarianz um einen Zeit-Parameter t erweitert: $f(s,a,t)$.

Für jedes Trainingsdatentupel (s,a,s') werden nun zwei oder mehrere Zeitpunkte gleichverteilt aus dem Intervall $[0;1]$ gezogen: $\{t1, t2, ..., tk\}$.

Dabei repräsentiert 0 den Zeitpunkt mit Zustand s und 1 den Zeitpunkt mit Zustand s'.

In einer weiteren Ausgestaltung wird das Machine-Learning-Modell durch mindestens eine Funktion angegeben mit der Mehrzahl der erweiterten Trainingsdatentupel als Eingabe der Funktion, wobei

für jedes erweiterte Trainingsdatentupel der Mehrzahl der erweiterten Trainingsdatentupel die Funktion das vorherige erweiterte Trainingsdatentupel berücksichtigt, indem
der jeweilige erste Datenwert des ersten Zustands durch die vorherige Funktion des vorherigen erweiterten Trainingsdatentupels ersetzt wird.

In einer weiteren Ausgestaltung weist das computer-implementierte Verfahren weiterhin auf

- Bestimmen eines simulierten Verhaltens des technischen Systems durch Anwendung des trainierten Machine-Learning-Modells auf eine Mehrzahl von Validierungsdatentupel,

- Validieren des trainierten Machine-Learning-Modells basierend auf einem Vergleich zwischen einem festgestellten Verhalten des technischen Systems und dem simulierten Verhalten des technischen Systems, und

- Bereitstellen des validierten Machine-Learning-Modells nach der Validierung.

In einer weiteren Ausgestaltung weist das computer-implementierte Verfahren weiterhin auf

- Anwenden des trainierten und/ oder validierten Machine-Learning-Modells auf eine Mehrzahl von Eingabedatentupel, und/oder

- Überprüfen des simulierten Verhaltens nach erfolgter Anwendung im Hinblick auf mindestens einer Anforderung.

In einer weiteren Ausgestaltung weist das computer-implementierte Verfahren weiterhin auf

- Anpassen des technischen Systems, mindestens einer technischen Komponente des technischen Systems, einer Funktion des technischen Systems, einer Funktion der mindestens eine technische Komponente, falls das simulierte Verhalten die mindestens eine Anforderung verletzt.

Dementsprechend schließt sich der Trainingsphase eine Validierungsphase mit Validierungsdatentupel an, bevorzugt, bevor das Machine-Learning-Modell eingesetzt wird. Bei der Validierung wird die Simulation mit neuen Daten verglichen, die aus dem technischen System analog zur primären Datengewinnung erfasst werden. Das reale Verhalten des technischen Systems wird mit dem simulierten Verhalten verglichen. Dadurch kann festgestellt werden, ob die Simulation das erwartete Verhalten mit ausreichender Genauigkeit aufweist.
Ist die Prüfung positiv verlaufen, kann das Machine-Learning-Modell für Szenarien gemäß einem Szenarienpool verwendet werden, der für die jeweilige Analyse des Verhaltens des technischen Systems gebraucht wird. Entspricht das Verhalten nicht den geforderten Anforderungen, kann daraus eine Änderung des technischen Systems, wie der Steuerung, abgeleitet und die Steuerung abgeändert werden.
In einer weiteren Ausgestaltung weist das computer-implementierte Verfahren weiterhin auf

- Ausgeben des trainierten und/ oder validierten Machine-Learning-Modells und/oder zugehöriger Daten auf einer Anzeigeeinheit,

- Speichern des trainierten und/ oder validierten Machine-Learning-Modells und/oder zugehöriger Daten in einer Speichereinheit, und/oder

- Übermitteln des trainierten und/ oder validierten Machine-Learning-Modells und/oder zugehöriger Daten an eine Recheneinheit.

Dementsprechend können eine oder mehrere Verfahrensschritte nach der Generierung des trainierten und/oder validierten Machine-Learning-Modells als Ausgabe des erfindungsgemäßen Verfahrens eingeleitet werden. Die Verfahrensschritte können gleichzeitig, nacheinander oder auch stufenweise durchgeführt werden.
Jegliche Eingabedaten oder Ausgabedaten können an beliebige Recheneinheiten, wie eine Anzeige-, eine Verarbeitungs-, oder eine Speichereinheit übertragen werden. Das trainierte und/ oder validierte Machine-Learning-Modell kann als Ausgabe bereitgestellt werden. Ferner kann das trainierte und/oder validierte Machine-Learning-Modell selbst oder in Form einer entsprechenden Nachricht oder Mitteilung an eine Recheneinheit übertragen werden.

Alternativ oder zusätzlich kann das validierte Machine-Learning-Modell auch ohne weitere Schritte nach erfolgter Validierung unmittelbar eingesetzt werden.

Der Vorteil liegt darin, dass die erforderlichen oder die gewünschten Verfahrensschritte flexibel ausgewählt und auf effiziente Art und Weise durchgeführt werden.

Ferner betrifft die Erfindung ein technisches System zum Durchführen des obigen Verfahrens.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.

FIG 1 zeigt ein schematisches Ablaufdiagramm des erfindungsgemäßen Verfahrens.

FIG 2 zeigt eine schematische Darstellung eines zweidimensionalen Zustandsraums mit diskreten Vorhersagen gemäß dem Stand der Technik.

FIG 3 zeigt eine schematische Darstellung eines zweidimensionalen Zustandsraums der Vorhersage der kontinuierlichen Zustandsänderungen gemäß einer Ausführungsform der Erfindung.

5. Beschreibung der bevorzugten Ausführungsformen

Im Folgenden werden bevorzugte Ausführungsformen der vorliegenden Erfindung in Bezug auf die Figur 1 beschrieben.

Figur 1 stellt ein Ablaufdiagramm des erfindungsgemäßen Verfahrens mit den Verfahrensschritten S1 bis S3 schematisch dar.

Im ersten Verfahrensschritt wird die Mehrzahl der Trainingsdatentupel bereitgestellt S1. Jeder Trainingsdatentupel der Mehrzahl der Trainingsdatentupel weist das erste Datenelement des ersten Zustands des technischen Systems und die Aktion auf. Der erste Zustand wechselt durch die Aktion in den zweiten Zustand. Das Machine-Learning-Modell wird auf Basis der Mehrzahl der Trainingsdatentupel und unter Berücksichtigung der Zeit-Invarianz trainiert S2. Im letzten Verfahrensschritt wird das trainierte Machine-Learning-Modell bereitgestellt S3.

Figur 3 zeigt eine schematische Darstellung eines zweidimensionalen Zustandsraums der Vorhersage der kontinuierlichen Zustandsänderungen gemäß einer Ausführungsform der Erfindung.

Die Trainingsdatentupel des Machine-Learning-Modells f werden um die Zeit-Invarianz erweitert. Gemäß einer Ausführungsform der Erfindung werden die Trainingsdatentupel um Zeit-Parameter t erweitert mit: $f(s,a,t)$. Dabei kann der Zeitparameter t Werte zwischen 0 und 1 annehmen.

Beispielsweise definiert die Funktion $f(s,a,1)$, dass die Aktion a vom Zustand s ausgehend für eine volle Zeiteinheit ausgeführt wird.

Die Funktion $f(s,a,0.3)$ definiert, dass die Aktion a vom Zustand s ausgehend für 0.3 Zeiteinheiten ausgeführt wird.

Wenn die Aktion a für 0.3 Zeiteinheiten ausgeführt wird, befindet sich das technische System danach im Zustand $s^{3} = f(s,a,0.3)$. Wenn dieselbe Aktion a danach für weitere 0.7 Zeiteinheiten ausgeführt wird, ist das technische System danach im Zustand $s^{3,7} = f(s^{3},a,0.7)$. Insgesamt wird die Aktion a folglich, ausgehend von Zustand s, für genau eine Zeiteinheit ausgeführt. Deshalb kann forciert werden, wobei gilt: $f(f(s,a,0.3),a,0.7) = f(s,a, 1)$.

Der Algorithmus zum Trainieren des Machine-Learning-Modells f mit Trainingsdaten D kann wie folgt definiert werden gemäß einer Ausführungsform:

Eingabe:

- D = {s_i, a_i, s'_i}_i
- Gewichtungen b (4 reelle Zahlen)

Ausgabe:

- Trainiertes Modell f(s,a,t)

$$L1(s,a,s') = (f(s,a,1) - s')^2$$

$$L2(s,a,s',t1) = (f(f(s,a,t1),a,1\text{-}t1) - s')^2$$

$$L3(s,a,s',t1) = (f(f(s,a,t2),a,1\text{-}t2) - s')^2$$

$$L4(s,a,s',t1) = (f(f(s,a,t1),a,t2\text{-}t1) - f(s,a,t2))^2$$

$$L(s,a,s',t1,t2,b) = b[0]*L1 + b[1]*L2 + b[2]*L3 + b[3]*L4$$

Ziehe für alle (s,a,s') aus D zufällige Zeitpunkte t1, t2 aus dem Intervall [0;1]

Optimiere das Neuronale Netz f mit der Loss-Funktion L

Die Loss-Funktion L zum Trainieren des Machine-Learning-Modells f, welche mittels Backpropagation minimiert werden kann, ergibt sich gemäß einer Ausführungsform als gewichtete Summe von vier Loss-Funktionen L1, L2, L3 und L4. Die vier Loss-Funktionen modellieren zusammen, dass die Zeit-Invarianz-Bedingung erfüllt ist und, dass der korrekte nächste (diskrete) Zustand vorhergesagt wird. Die nächste Zustand wird auch als zweiter oder anderer Zustand bezeichnet.
Für jedes Trainingsdatentupel (s,a,s') können auch mehrere Zeit-Tupel generiert werden.
Zur Abschätzung der epistemischen Unsicherheit kann gemäß einer Ausführungsform nicht nur ein einziges Machine-Learning-Modells f(s,a,t) gelernt werden, sondern ein Ensemble aus mehreren solcher Machine-Learning-Modelle.
Nach erfolgtem Training wird das trainierte Machine-Learning-Modell bereitgestellt. Das Ergebnis des Trainings ist gemäß einer Ausführungsform eine Simulationsfunktion f für das technische System. Die Simulationsfunktion f ermöglicht Voraussagen oder Vorhersagen über nicht in der Menge D enthaltene Zustandsänderungen.

**Patentansprüche**

1. Computer-implementiertes Verfahren zum Generieren eines trainierten Machine-Learning-Modells zum Simulieren eines Verhaltens eines technischen Systems, aufweisend die Schritte:

    a. Bereitstellen von einer Mehrzahl von Trainingsdatentupel (S1); wobei

       jeder Trainingsdatentupel der Mehrzahl der Trainingsdatentupel ein erstes Datenelement eines ersten Zustands des technischen Systems und eine Aktion aufweist; wobei
       der erste Zustand durch die Aktion in einen zweiten Zustand wechselt;

    b. Trainieren eines Machine-Learning-Modells auf Basis der Mehrzahl der Trainingsdatentupel und unter Berücksichtigung einer Zeit-Invarianz (S2); und
    c. Bereitstellen des trainierten Machine-Learning-Modells (S3).

2. Computer-implementiertes Verfahren nach Anspruch 1, wobei die Mehrzahl der Trainingsdatentupel jeweils diskrete Messpunkte sind.

3. Computer-implementiertes Verfahren nach Anspruch 1 oder Anspruch 2, wobei die Datenelemente Daten sind, bevorzugt Systemdaten.

4. Computer-implementiertes Verfahren nach einem der vorhergehenden Ansprüche, wobei beim Trainieren in Schritt b. die Zeit-Invarianz berücksichtigt wird indem

jedes Trainingsdatentupel der Mehrzahl der Trainingsdatentupel um jeweils mindestens einen Zeitparameter erweitert wird; wobei
der mindestens eine Zeitparameter jeweils angibt, dass die jeweilige Aktion vom ersten Zustand ausgehend für die zugehörige bestimmte Zeiteinheit des Zeitparameters ausgeführt wird.

5. Computer-implementiertes Verfahren nach Anspruch 4, wobei das Machine-Learning-Modell durch mindestens eine Funktion angegeben wird mit der Mehrzahl der erweiterten Trainingsdatentupel als Eingabe der Funktion, wobei

für jedes erweiterte Trainingsdatentupel der Mehrzahl der erweiterten Trainingsdatentupel die Funktion das vorherige erweiterte Trainingsdatentupel berücksichtigt, indem
der jeweilige erste Datenwert des ersten Zustands durch die vorherige Funktion des vorherigen erweiterten Trainingsdatentupels ersetzt wird.

6. Computer-implementiertes Verfahren nach einem der vorhergehenden Ansprüche, weiterhin aufweisend

- Bestimmen des simulierten Verhaltens des technischen Systems durch Anwendung des trainierten Machine-Learning-Modells auf eine Mehrzahl von Validierungsdatentupel,
- Validieren des trainierten Machine-Learning-Modells basierend auf einem Vergleich zwischen einem festgestellten Verhalten des technischen Systems und dem simulierten Verhalten des technischen Systems, und
- Bereitstellen des validierten Machine-Learning-Modells nach der Validierung.

7. Computer-implementiertes Verfahren nach Anspruch 6, weiterhin aufweisend

- Anwenden des trainierten und/ oder validierten Machine-Learning-Modells auf eine Mehrzahl von Eingabedatentupel, und/oder
- Überprüfen des simulierten Verhaltens nach erfolgter Anwendung im Hinblick auf mindestens einer Anforderung.

8. Computer-implementiertes Verfahren nach Anspruch 7, weiterhin aufweisend

- Anpassen des technischen Systems, mindestens einer technischen Komponente des technischen Systems, einer Funktion des technischen Systems, einer Funktion der mindestens einen technischen Komponente, falls das simulierte Verhalten die mindestens eine Anforderung verletzt.

9. Computer-implementiertes Verfahren nach einem der vorhergehenden Ansprüche, weiterhin aufweisend

- Ausgeben des trainierten und/ oder validierten Machine-Learning-Modells und/oder zugehöriger Daten auf einer Anzeigeeinheit,
- Speichern des trainierten und/ oder validierten Machine-Learning-Modells und/oder zugehöriger Daten in einer Speichereinheit, und/oder
- Übermitteln des trainierten und/ oder validierten Machine-Learning-Modells und/oder zugehöriger Daten an eine Recheneinheit.

10. Technisches System zum Durchführen des Verfahrens nach einem der vorhergehenden Ansprüche.

11. Computerprogrammprodukt mit einem Computerprogramm, das Mittel zur Durchführung des Verfahrens nach einem der Ansprüche 1 bis 10 aufweist, wenn das Computerprogramm auf einer programmgesteuerten Einrichtung zur Ausführung gebracht wird.

# FIG 1

# FIG 2

# FIG 3

Europäisches
Patentamt

European
Patent Office

Office européen
des brevets

**EUROPÄISCHER RECHERCHENBERICHT**

Nummer der Anmeldung

EP 24 16 3744

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/197246 A1 (CELLA CHARLES H [US] ET AL) 23. Juni 2022 (2022-06-23) * Absätze [1754], [0114], [1756], [1787], [1760], [1761], [1797]; Ansprüche 1,7; Abbildungen 114-121 * - - - - - | 1-11 | INV. G06N3/0499 G06N7/01 G06N20/00 |

RECHERCHIERTE SACHGEBIETE (IPC)

G06N

Der vorliegende Recherchenbericht wurde für alle Patentansprüche erstellt

| Recherchenort | Abschlußdatum der Recherche | Prüfer |
|---|---|---|
| München | 13. September 2024 | Thielemann, Benedikt |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 3744

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2024

| Im Recherchenbericht angeführtes Patentdokument | Datum der Veröffentlichung | Mitglied(er) der Patentfamilie | | Datum der Veröffentlichung |
|---|---|---|---|---|
| US 2022197246 A1 | 23-06-2022 | AU | 2021401816 A1 | 22-06-2023 |
|  |  | EP | 4264518 A1 | 25-10-2023 |
|  |  | JP | 2024500818 A | 10-01-2024 |
|  |  | KR | 20230135069 A | 22-09-2023 |
|  |  | US | 2022193915 A1 | 23-06-2022 |
|  |  | US | 2022196889 A1 | 23-06-2022 |
|  |  | US | 2022197246 A1 | 23-06-2022 |
|  |  | US | 2022197247 A1 | 23-06-2022 |
|  |  | US | 2022197306 A1 | 23-06-2022 |
|  |  | US | 2022305735 A1 | 29-09-2022 |
|  |  | US | 2022318707 A1 | 06-10-2022 |
|  |  | US | 2023089330 A1 | 23-03-2023 |
|  |  | US | 2023090334 A1 | 23-03-2023 |
|  |  | US | 2023097438 A1 | 30-03-2023 |
|  |  | US | 2023103078 A1 | 30-03-2023 |
|  |  | US | 2023135553 A1 | 04-05-2023 |
|  |  | US | 2023339108 A1 | 26-10-2023 |
|  |  | US | 2023339114 A1 | 26-10-2023 |
|  |  | US | 2023341850 A1 | 26-10-2023 |
|  |  | US | 2023342684 A1 | 26-10-2023 |

EPO FORM P0461

Für nähere Einzelheiten zu diesem Anhang : siehe Amtsblatt des Europäischen Patentamts, Nr.12/82